# EUROPÄISCHE PATENTSCHRIFT

(11) **EP 4 096 859 B1**
(45) Veröffentlichungstag und Bekanntmachung des Hinweises auf die Patenterteilung: **10.09.2025**
(21) Anmeldenummer: 21701522.1
(22) Anmeldetag: 22.01.2021
(51) Int. Cl.: B23K 26/06, B23K 26/0622, B23K 26/073, B23K 26/082, B23K 26/21, B23K 26/32, B23K 26/354

(54) **VERFAHREN ZUM BEARBEITEN EINES METALLISCHEN WERKSTÜCKS**
METHOD FOR MACHINING A METAL WORKPIECE
PROCÉDÉ POUR USINER UNE PIÈCE MÉTALLIQUE

(30) Priorität: 27.01.2020 DE 102020200909
(43) Veröffentlichungstag der Anmeldung: 07.12.2022
(73) Patentinhaber: Fraunhofer-Gesellschaft zur Förderung der angewandten Forschung e.V., 80686 München (DE); Technische Universität Dresden, 01069 Dresden (DE)
(72) Erfinder: SEIFERT, Marko, 01277 Dresden (DE); LEYENS, Christoph, 01277 Dresden (DE); FUX, Volker, 01277 Dresden (DE); FIEBIGER, Thomas, 01277 Dresden (DE); BERGER, Andrea, 01277 Dresden (DE)
(74) Vertreter: Pfenning, Meinig & Partner mbB
(86) Internationale Anmeldenummer: PCT/EP2021/051450
(87) Internationale Veröffentlichungsnummer: WO 2021/151789

(56) Entgegenhaltungen:
- EP-A1- 1 832 377
- EP-A1- 2 596 900
- WO-A1-99/06173

## Beschreibung

Die vorliegende Erfindung betrifft ein Verfahren zum Bearbeiten eines metallischen Werkstücks, siehe Anspruch 1.

Aus dem Stand der Technik ist bekannt, dass Laserstrahlen, die auf blanke Metalloberflächen treffen, und deren Abbildungen auf Oberflächen, die auch als "Spot" bezeichnet werden in Abhängigkeit von Wellenlänge, Polarisation, Einfallswinkel, Oberflächenbeschaffenheit sowie chemischer Zusammensetzung des Metalls zu sehr unterschiedlichen Anteilen absorbiert und reflektiert werden. Ein weiterer signifikanter Einfluss ergibt sich aus der Intensität (W/cm²), also der Strahlungsleistung pro Fläche des bestrahlten Metalls, die auch als Bestrahlungsstärke bezeichnet wird.

Verfahren zur Lasermaterialbearbeitung, die mit hoch fokussierten Laserstrahlen arbeiten, nutzen hohe Laserstrahlintensitäten im Bereich MW/cm². Bei diesen Intensitäten kommt es zur Dampf- und Plasmabildung mit der Folge einer hohen Absorption von mehr als 80 Prozent der auftreffenden Laserstrahlungsenergie.

Verfahren zur Lasermaterialbearbeitung, bei denen Dampf- und Plasmaphasen aus Gründen der Prozessführung oder aus metallurgischen Gründen zu vermeiden sind, müssen geringere Laserintensitäten nutzen. Bei derartig niedrigen Intensitäten erfolgt an blanken Metalloberflächen eine deutlich geringere Absorption von maximal 40 bis 50 Prozent.

Um Effektivität und Variabilität von Laserbearbeitungsverfahren zu verbessern wird unter anderem auch die Kombination von zwei oder mehreren Lasern vorgeschlagen. So ist beispielsweise aus der Druckschrift DE 102 61 422 A1 bekannt, zusätzliche Laserspots zur besseren Gestaltung und Optimierung des Laserschweißprozesses von verzinkten Stahlblechen vorzusehen. Aus der Druckschrift DE 10 2016 201 418 A1 wird die Überlagerung mehrerer gleicher Laserspots vorgeschlagen, um eine lokale, applikationsangepasste Intensitäts-überhöhung im Arbeitsfleck einstellen zu können. Eine Überlagerung eines Diodenlaserspots, welcher eine für Schweißaufgaben vergleichsweise geringe Intensität aufweist, mit einem Faserlaserfleck, der höhere Intensität aufweist, wird in der Druckschrift DE 29822750 U1 vorgeschlagen, um Diodenlaser für Schweiß-, Schneid- und Bohraufgaben nutzbar zu machen. Dies wird erreicht, indem der Faserlaser eine Intensitätsspitze in der Mitte des Diodenlaserspots erzeugt.

Die aus dem Stand der Technik bekannten Verfahren, in denen Laserstrahlen überlagert werden, verfolgen nicht das Ziel, die schlechte Absorption der Laserstrahlung auf blanken metallischen Oberflächen bei Intensitäten ohne Plasmaausbildung zu verbessern.

So sind aus WO 99/06173 A1 (offenbarend den Oberbegriff des Anspruchs 1) ein Verfahren und Vorrichtung zum Schweißen mittels Laserstrahlung bekannt. Dabei werden zwei Laserstrahlen eingesetzt.

EP 2 596 900 A1 betrifft eine Vorrichtung und Verfahren zur Materialbearbeitung bei denen sich zwei Laserstrahlen überlagern.

Aus EP 1 832 377 A1 gehen eine ähnliche Vorrichtung und Verfahren zum Schweißen eines Werkstückes hervor.

Der vorliegenden Erfindung liegt daher die Aufgabe zugrunde, ein Verfahren vorzuschlagen, mit dem die genannten Nachteile überwunden werden, d. h. mit dem in energetisch effizienter Weise eine Lasermaterialbearbeitung ermöglicht wird.

Diese Aufgabe wird erfindungsgemäß gelöst durch ein Verfahren nach Anspruch 1. Vorteilhafte Ausgestaltungen und Weiterbildungen sind in den abhängigen Ansprüchen beschrieben.

Das Wesensmerkmal der vorliegenden Erfindung ist somit eine Überlagerung der Laserspots von Prozesslaserstrahl und Anregungslaserstrahl mit dem Ziel einer signifikanten Erhöhung der Laserstrahlabsorption über den gesamten Bereich des Prozesslaserspots. Dazu wird ein Spot des Anregungslasers mit einer Intensität von mehr als 10⁵ W/cm² so mit dem üblicherweise großflächigeren Prozesslaserspot überlagert, dass in diesem sehr partiell wirkende, aber gleichmäßig über die gesamte Prozesslaserfläche verteilte quasistationäre Dampf- bzw. Plasmaphasen erzeugt werden. Der hochintensive Anregungslaserspot wird dabei typischerweise ein- oder zweidimensional, z. B. dynamisch bewegt als Punkt, kleiner Kreis, Linie oder schmales Rechteck und/oder als optisch geformte Multispotlinie oder -fläche pulsierend über den Prozesslaserspot gelegt. Hierdurch wird in einem Prozesslaserspot mit einer Intensität von weniger als 10⁵ W/cm² ein Absorptionsgrad erreicht, der bisher nur Lasertechnologien vorbehalten ist, die mit Intensitäten von mehr als 10⁶ W/cm² arbeiten.

Das erfindungsgemäße Verfahren ermöglicht eine effektivere Einkopplung von Laserstrahlung in metallische Oberflächen auch für die Lasermaterialbearbeitung im Bereich niedriger Intensitäten und verbessert somit die Energieeffizienz des Verfahrens signifikant. Bei gleichmäßiger Verteilung vieler kleiner Plasmaspots durch das räumlich variierende Aufbringen des Anregungslaserstrahls, kann, bezogen auf eine vergleichbare Ausgangsleistung, ein deutlich größerer Energieeintrag über die gesamte laserbehandelte Fläche beobachtet werden.

Der Laserspot des Anregungslaserstrahls hat die Aufgabe, durch eine lokale Intensitätserhöhung sehr kurzzeitig verweilende Dampf- und Plasmaphasen zu erzeugen, welche flächendeckend den Laserspot des Prozesslaserstrahls in einer quasistationären Form überlagern. Dieses führt zu einer deutlich höheren Absorption der Strahlung des Prozesslaserstrahls.

Typischerweise ist der Anregungslaserstrahl derart ausgebildet, dass er ein Strahlparameterprodukt von kleiner oder gleich 4 mm mrad aufweist, um eine vorteilhafte Fokussierung auf der Werkstückoberfläche zu gewährleisten. Der Anregungslaserstrahl kann hierbei als kontinuierlich emittierender Laserstrahl oder als gepulst emittierender Laserstrahl vorliegen. Der Prozesslaserstrahl kann alternativ oder zusätzlich als kontinuierlich emittierender Laserstrahl oder als gepulst emittierender Laserstrahl vorliegen. Hierdurch kann nicht nur eine räumliche, sondern auch eine zeitliche Überlagerung der beiden Laserstrahlen eingestellt werden.

Der Prozesslaserstrahl wird mit einer Leistung von mehr als 1 kW und bis zu 100 kW, vorzugsweise mehr als 2,5 kW und bis zu 8 kW, und der Anregungslaserstrahl wird mit einer Leistung von mehr als 0,2 kW und bis zu 3 kW, vorzugsweise mehr als 0,5 kW und bis zu 1,5 kW emittiert. Der Prozesslaserstrahl weist im Auftreffbereich eine Intensität von weniger als oder bis zu 10⁵ W/cm². Der Anregungslaserstrahl weist im Auftreffbereich typischerweise eine Intensität von mehr als 10⁵ W/cm² auf.

Der Spot des Anregungslaserstrahls kann punktförmig, linienförmig oder rechteckförmig ausgebildet werden. Der Laserspot des Prozesslaserstrahls kann kreisförmig oder mit elliptischem oder rechteckigem Querschnitt ausgebildet sein, um die für die Lasermaterialbearbeitung gewünschten Geometrien bereitzustellen.

Das beschriebene Verfahren kann mit der beschriebenen Vorrichtung durchgeführt werden.

Das beschriebene Verfahren wird typischerweise zum Laserwalzplattieren, Laserlöten, Laserhärten, Laserumschmelzen oder Laser-Schmelzschweißen verwendet.

Ausführungsbeispiele der Erfindung sind in den Zeichnungen dargestellt und werden nachfolgend anhand der Figuren 1 bis 7 erläutert.

Es zeigen:
- Fig. 1: eine schematische Ansicht einer Vorrichtung (nicht Teil der Erfindung) zur Lasermaterialbearbeitung mit linienförmigem Prozesslaserspot überlagert mit einem eindimensional scannenden Anregungslaserspot;
- Fig. 2: eine Figur 1 entsprechende Ansicht mit einem defokussierten Prozesslaserspot und zweidimensional scannenden Anregungslaserspot;
- Fig. 3: eine Figur 1 entsprechende Ansicht mit Scannen des Prozesslasers bei gleichzeitiger Überlagerung mit zweidimensional scannenden Anregungslasers;
- Fig. 4: eine Figur 1 entsprechende Ansicht mit rechteckförmigem Prozesslaserspot überlagert mit einem zweidimensional scannenden Anregungslaserspot;
- Fig. 5: schematisch dargestellte Beispiele für Scanmuster bzw. Pulsmuster bei eindimensionaler Überlagerung;
- Fig. 6: weitere schematisch dargestellte Beispiele für Pulsmuster bei zweidimensionaler Überlagerung und
- Fig. 7: schematisch dargestellte Beispiele für Scanmuster bei zweidimensionaler Überlagerung.

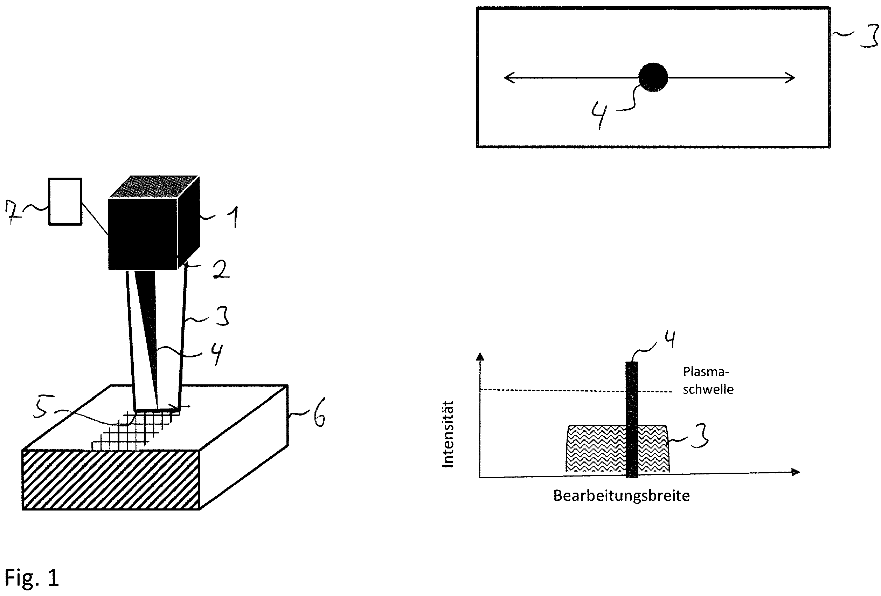

In Figur 1 ist in einer schematischen Ansicht eine Vorrichtung und ein Verfahren zur Lasermaterialbearbeitung wiedergegeben. Einem Bearbeitungskopf 1 werden die von den jeweiligen Laserquellen emittierten Laserstrahlen, nämlich der Prozesslaserstrahl 3 und Anregungslaserstrahl 4, mit Hilfe von optischen Elementen zugeführt. In diesem Bearbeitungskopf sind weitere Optickomponenten 2 zur Formung und Bewegung des Prozesslaserstrahls 3 und des Anregungslaserstrahls 4 integriert, die wiederum über die Steuereinheit 7 angesteuert werden. In weiteren Ausführungsbeispielen kann die Vorrichtung auch über separate, nur für die einzelnen Laser ausgelegte Bearbeitungsköpfe realisiert und für das Verfahren genutzt werden.

Die Anregungslaserquelle kann als Diodenlaserquelle oder Festkörperlaserquelle, insbesondere als Scheibenlaser oder Faserlaser, ausgebildet sein. Gleiches gilt für die Prozesslaserquelle, wobei prinzipiell alle Hochleistungslaserquellen, die ihre Strahlung im Infrarot-Bereich emittieren, geeignet sind. Die Anregungslaserquelle und die Prozesslaserquelle können vom gleichen Typ sein, es können aber auch unterschiedliche Typen von Laserquellen benutzt werden.

In dem in Figur 1 dargestellten Ausführungsbeispiel wird der Spot des Anregungslaserstrahls 4 eindimensional über den als breite Linie ausgeführten Spot des Prozesslaserstrahls 3 gescannt.

In Figur 1 ist rechts unten in einem Diagramm schematisch zudem noch die Intensität über der Bearbeitungsbreite aufgetragen. Der Prozesslaserstrahl 3 weist eine Intensität auf, die unterhalb der Plasmaschwelle liegt. Die Intensität des Anregungslaserstrahls 4 liegt über der Plasmaschwelle.

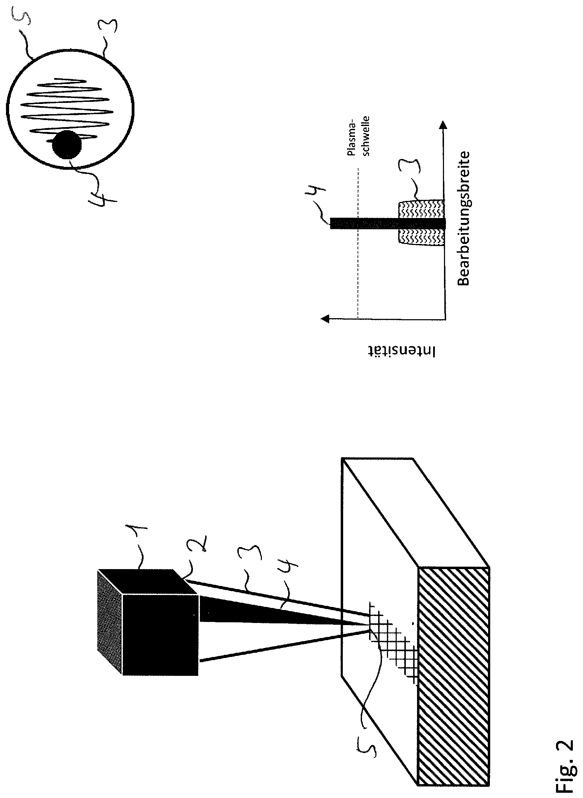

Figur 2 zeigt in einer Figur 1 entsprechenden Ansicht ein weiteres Ausführungsbeispiel. Wiederkehrende Merkmale sind in dieser Figur und den folgenden Figuren mit identischen Bezugszeichen versehen. Bei dem in Figur 2 gezeigten Ausführungsbeispiel wird, im Gegensatz zu dem in Figur 1 dargestellten Beispiel, die Breite der zu behandelnden Oberflächenzone 5 durch den Durchmesser des Prozesslaserspots 3 vorgegeben. In diesem Ausführungsbeispiel erfolgt nur eine Scanbewegung des Anregungslaserspots 4, welcher wie in Figur 1 den Spot des Prozesslasers überlagert. Das rechts unten dargestellte Diagramm gibt wiederum schematisch die Verhältnisse der Intensitäten und der Spotdurchmesser beiden Laserspots wieder. Der Prozesslaserstrahl 3 weist eine Intensität auf, die unterhalb der Plasmaschwelle liegt, während der Anregungslaserstrahl 4 diese überschreitet.

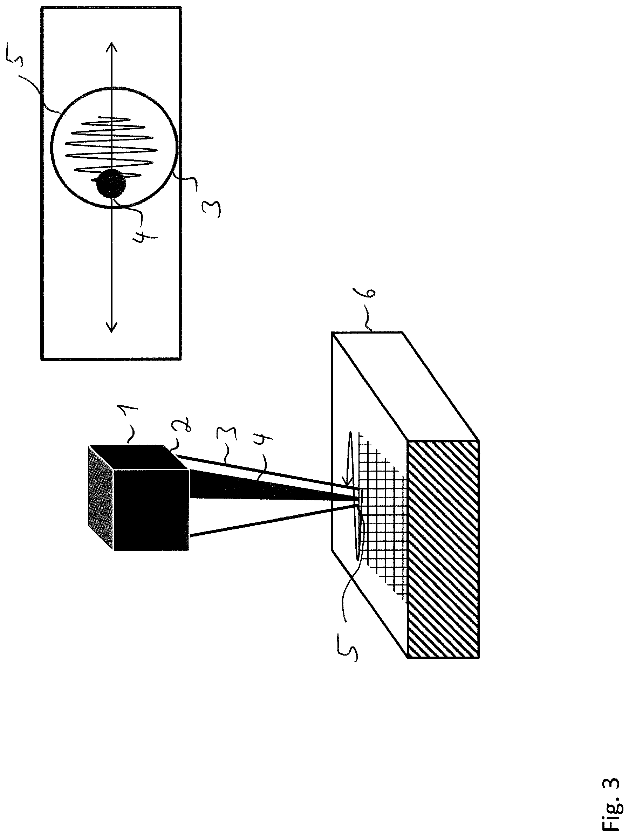

Das in Figur 3 dargestellte Ausführungsbeispiel zeigt einen kreisrunden LaserSpot 3 eines Diodenlasers mit 4 mm Durchmesser, welcher als Prozesslaser eindimensional über die Breite einer umzuschmelzenden Oberflächenzone 5 eines aus einer Aluminium-Gusslegierung bestehenden Bauteils 6 mit Hilfe eines optischen Scanners 2 bewegt wird. Bei einer genutzten Laserleistung von 6,0 kW ergibt sich im Laserspot eine Intensität von ca. 4 x 10⁴ W/cm². Diese Leistungskriterien würden bei einer Vorschubgeschwindigkeit von 500 mm/min eine Umschmelztiefe von ca. 1 mm bewirken. Wird der Prozesslaserspots mit einem zweidimensional gescannten Spot 4 eines Anregungslasers mittels dazugehöriger Steuer- und Regeleinheit 7 so überlagert, dass seine gesamte Fläche durch den im Durchmesser nur 0,2 mm großen Anregungslaser-Spot 4 abgescannt wird, wie in Figur 3 oben rechts dargestellt, ergibt sich bei einer genutzten Leistung des Anregungslasers von 300 W eine Umschmelztiefe von ca. 2,0 mm. Durch die Intensität von 1 x 10⁶W/cm² im Spot des Anregungslasers, welche vergleichsweise schnell über den Spot 3 des Prozesslasers und mit diesem mit bewegt wird, entstehen viele kleine und über den gesamten Spot des Prozesslasers verteilte quasistationär wirkende Dampf-und Plasmaphasen. Hierdurch wird die Absorption der Prozesslaserstrahlung signifikant erhöht und durch den größeren Energieeintrag in die Bauteiloberfläche eine höhere Umschmelztiefe erreicht, welche alternativ nur bei Einsatz der doppelten Leistung des Prozesslasers erreicht werden kann.

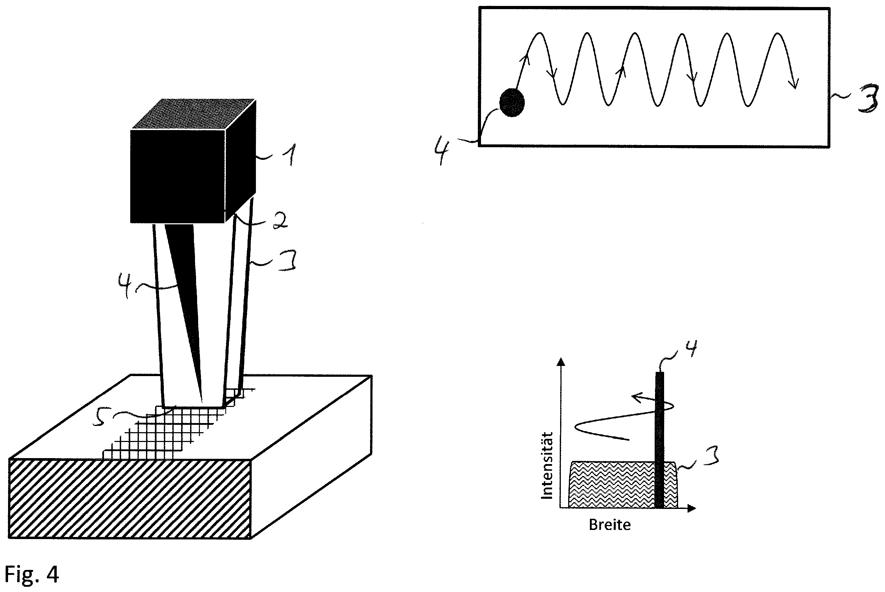

Bei dem in Figur 4 wiederum in einer den Figuren 1 bis 3 entsprechenden Ansicht dargestellten Ausführungsbeispiel wird der Spot des Anregungslaserstrahls 4 in einem geeigneten Scann-Muster über den rechteckförmig ausgeformten Prozesslaserstrahl 3 bewegt.

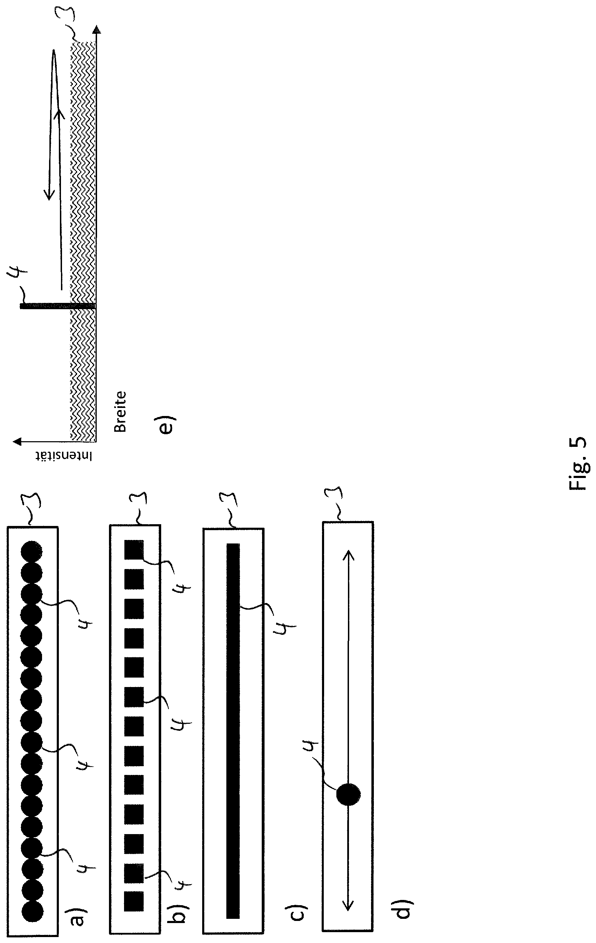

In Figur 5 sind in einer Draufsicht mehrere Ausführungsbeispiele für die Ausformung der Spots beider Laserstrahlen gezeigt. Bei dem in den Figuren 5a) bis 5d) gezeigten Ausführungsbeispielen ist der Spot des Prozesslaserstrahls 3 als Linie bzw. schmales Rechteck ausgelegt. Der Spot des Anregungslaserstrahls 4 kann jeweils in verschiedenen Formen zum Einsatz kommen. In Figur 5a) ist der Anregungslaserstrahl 4 als kontinuierlicher oder gepulster Multispot mit mehreren Spots gleicher Größe und Form dem Spot des Prozesslaserstrahls 3 überlagert. Während in Figur 5a) alle Spots rund sind und einander tangieren, ist bei dem in Figur 5b) gezeigten Ausführungsbeispiel jeder Spot quadratisch ausgeführt und räumlich beabstandet zu weiteren Spots.

Bei dem in Figur 5c) wiedergegebenen Ausführungsbeispiel sind beide Laser als Linie geformt überlagert, wobei der Anregungslaserspot 4 dabei sowohl kontinuierlich als auch gepulst zur Anwendung kommen kann. In Figur 5d) ist ein Ausführungsbeispiel gezeigt, bei dem der Spot des Prozesslasers 3 als Linie bzw. schmales Rechteck geformt ist und mit dem fokussierten und gescannten Spot des Anregungslasers linienförmig überlagert wird. Die dabei genutzte Intensitätsverteilung beider Laser wird in Figur 5e) gezeigt.

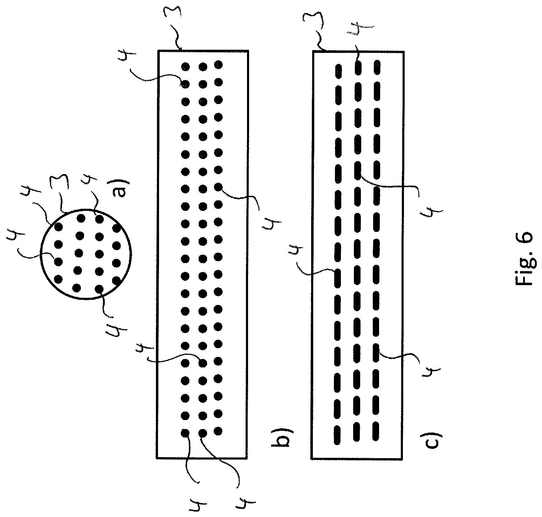

In Figur 6 sind Laserüberlagerungen von Prozesslaserstrahl und Anregungslaserstrahl bei flächiger Ausführung des Prozesslaserspots dargestellt. Der rechteckige oder kreisförmige Prozesslaserspot 3wird dabei mittels Festoptiken erzeugt und wirkt kontinuierlich auf die Bauteiloberfläche ein. Der kleinere Anregungslaserspot 4 kann als Punktspot mittels 2D-Scanner über den Prozesslaserspot, wie in den Figuren 6a) bis c) dargestellt, geführt werden oder mittels ebenfalls über Festoptiken erzeugten Multispot- Abbildungen pulsierend über diesen gelegt werden. Beim Scannen des Anregungslaserspots 4 können integrierte Sprungfunktionen z.B. eine Homogenisierung des Energieeintrags in die Werkstückoberfläche bewirken.

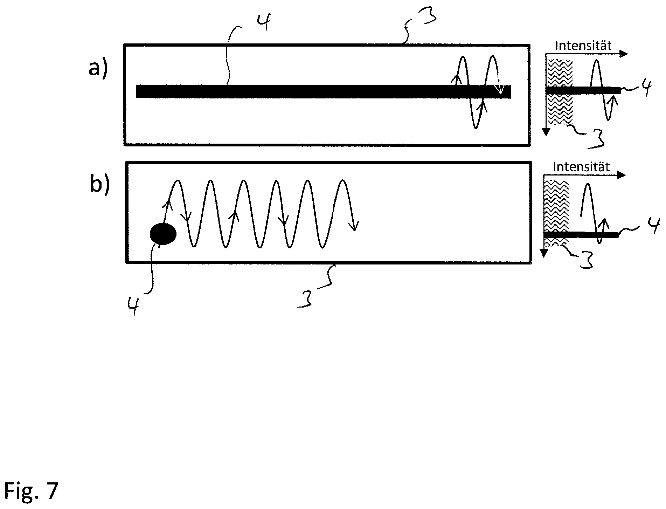

In Figur 7 sind in einer Figur 5 entsprechenden Ansicht weitere Ausführungsbeispiel für unterschiedliche Bearbeitungsmuster gezeigt. Bei den beiden dargestellten Ausführungsbeispielen ist der Prozesslaserstrahl 3 rechteckförmig, während der Spot des Anregungslaserstrahls 4 als Linie ausgeführt ist Dieser wird mittels Scanner über die gesamte Fläche des Prozesslaserstrahls 3 geführt, wie auch im Diagramm über die Bearbeitungsbreite gezeigt.

In Figur 7b) ist der Spot des Anregungslaserstrahls 4 punktförmig und wird zweidimensional über die Fläche des Prozesslaserspots gescannt.

Für eine Realisierung von Laserbearbeitungsverfahren werden Laseroptiken bzw. spezielle Bearbeitungsköpfe eingesetzt. Die Nutzung von Laserstrahlen mit unterschiedlicher Strahlformung kann sowohl über separate Laseroptiken inklusive notwendiger Komponenten zur Strahlbewegung als auch über den Entwurf eines speziellen Bearbeitungskopfes erfolgen, der die notwendigen Komponenten in sich vereint.

Die Bewegung des Anregungslaserstrahls 4 über die Fläche des Prozesslaserstrahls 3 auf dem Werkstück 6 erfolgt je nach Anwendung mit unterschiedlichen Bewegungsmustern und Verweilzeiten. Ziel ist es, jeweils Dampf- und bzw. oder Plasmaphasen zu erzeugen, um einen möglichst quasistationären Zustand dieser während der Laserbehandlung des Bauteils zu erzeugen. Die lokale Größe und Existenzzeit der Dampf- bzw. Plasmaphasen können durch geeignete optische Sensoren erfasst und in Rückkopplung mit dem Anregungslaser und der Scannersteuerung auf die jeweiligen Bearbeitungs-aufgaben abgestimmt und ausgeregelt werden.

Eine geregelte Bildung vieler kleiner und bzw. oder zusammenhängender Plasmen über der Prozesslaserfläche bringt mehrere Vorteile mit sich. Auch bei Nutzung geringer Laserintensitäten kann eine deutlich größere Energie-Einkopplung erfolgen. Der Einfluss der Oberflächenbeschaffenheit auf die Absorption der Laserstrahlung kann weitestgehend ausgeregelt werden. Gleiches gilt für den Einfluss der chemischen Zusammensetzungen auf die Absorption der Laserstrahlung. Insgesamt ergeben sich dadurch eine Verbesserung der Reproduzierbarkeit des jeweiligen Laserprozesses und eine schnellere Anpassung der Bearbeitungsparameter bei neuen Anwendungen. Eine Lasermaterialbearbeitung für die Behandlung von Kupfer-, Silber und Goldwerkstoffen wird auch mit Wellenlängen des infraroten Spektralbereichs, d. h. bei Wellenlängen zwischen 780 nm und 10 µm, möglich. Zudem können bei gleichzeitiger Laserbestrahlung unterschiedlicher Metalle bzw. Metalllegierungen die Parameter des Anregungslaserstrahls 4 auch stoffspezifisch angepasst werden. Somit wird eine deutliche Verbesserung der Wirtschaftlichkeit erreicht durch Nutzung einer geringeren Laserleistung und bzw. oder eine Vergrößerung der zu behandelnden Fläche bzw. Nutzung höherer Prozessgeschwindigkeiten. Schließlich sind auch geringere Schutzmaßnahmen gegenüber Reflexionen nötig.

## Patentansprüche

1. Verfahren zum Bearbeiten eines metallischen Werkstücks (6) mit einer einen Anregungslaserstrahlspot (4) emittierenden Anregungslaserquelle und einer einen Prozesslaserstrahlspot (3) emittierenden Prozesslaserquelle,
**dadurch gekennzeichnet, dass**:
der Anregungslaserstrahlspot (4) ein- oder zweidimensional bewegt wird und der Prozesslaserstrahlspot (3) zumindest teilweise auf einem zu bearbeitenden Auftreffbereich (5) des Werkstücks (6) räumlich variierend überlagert werden und
der Anregungslaserstrahlsspot (4) im Auftreffbereich eine höhere Strahlintensität als der Prozesslaserstrahlspot (3) aufweist, so dass in dem Auftreffbereich (5) ein Plasma und/oder ein Dampf ausgebildet wird, indem durch eine lokale Intensitätserhöhung des Anregungslaserstrahlspots sehr kurzzeitig verweilende Dampf- und Plasmaphasen erzeugt werden, welche flächendeckend den Laserspot des Prozesslaserstrahls in einer quasistationären Form überlagern, wobei
der Prozesslaserstrahl (3) mit einer Leistung von mehr als 1 kW und bis zu 100 kW und der Anregungslaserstrahl (4) mit einer Leistung von mehr als 0,2 kW und bis zu 3 kW emittiert wird und der Prozesslaserstrahlspot (3) im Auftreffbereich (5) eine Intensität von weniger als oder bis zu 10⁵ W/cm² aufweist und der Anregungslaserstrahlspot (4) im Auftreffbereich (5) eine Intensität von mehr als 10⁵ W/cm² aufweist.

2. Verfahren nach Anspruch 1, **dadurch gekennzeichnet, dass** der Anregungslaserstrahl (4) derart eingestellt wird, dass eine Querschnittsfläche des Laserspots als Abbildung des Anregungslaserstrahls (4) im Auftreffbereich (5) kleiner als eine Querschnittsfläche des Laserspots des Prozesslaserstrahls (3) ist.

3. Verfahren nach Anspruch 1 oder Anspruch 2, **dadurch gekennzeichnet, dass** der Laserspot des Anregungslaserstrahls (4) über die Querschnittsfläche des Laserspots des Prozesslaserstrahls (3) im Auftreffbereich (5) bewegt wird.

4. Verfahren nach einem der vorhergehenden Ansprüche, **dadurch gekennzeichnet, dass** der Anregungslaserstrahl (4) gepulst emittiert wird und mit einer durch optische Strahlformungselemente (2) bestimmten Intensitätsverteilung über die Querschnittsfläche des Laserspots des Prozesslaserstrahls (3) im Auftreffbereich (5) gelegt wird.

5. Verfahren nach einem der vorhergehenden Ansprüche, **dadurch gekennzeichnet, dass** der Anregungslaserstrahl (4) ein Strahlparameterprodukt von kleiner oder gleich 4 mm mrad aufweist.

6. Verfahren nach einem der vorhergehenden Ansprüche, **dadurch gekennzeichnet, dass** der Anregungslaserstrahl (4) mit einer niedrigeren Leistung als der Prozesslaserstrahl (3) emittiert wird.

7. Verfahren nach einem der vorhergehenden Ansprüche, **dadurch gekennzeichnet, dass** der Prozesslaserstrahl (3) mit einer Leistung von mehr als 2,5 kW und bis zu 8 kW, und der Anregungslaserstrahl (4) mit einer Leistung von mehr als 0,5 kW und bis zu 1,5 kW emittiert wird.

8. Verfahren nach einem der vorhergehenden Ansprüche, **dadurch kennzeichnet, dass** der Anregungslaserstrahl (4) im Auftreffbereich (5) punktförmig, linienförmig oder rechteckförmig ausgebildet wird.

9. Verfahren nach einem der vorhergehenden Ansprüche, **dadurch kennzeichnet, dass** der Prozesslaserstrahl (3) im Auftreffbereich (5) kreisförmig oder mit elliptischem, linienförmigem oder rechteckigem Querschnitt ausgebildet wird.

## Claims

1. A method for machining a metallic workpiece (6) with an excitation laser source emitting an excitation laser beam spot (4) and a process laser source emitting a process laser beam spot (3),
**characterised in that**:
the excitation laser beam spot (4) is moved in one or two dimensions and the process laser beam spot (3) is at least partially superimposed onto an impact area (5) of the workpiece (6) to be processed in a spatially varying manner, and
the excitation laser beam spot (4) has a higher beam intensity than the process laser beam spot (3) in the impact area, so that a plasma and/or a vapour is formed in the impact area (5) by generating via a local increase in the intensity of the excitation laser beam very short-lived lingering vapour and plasma phases which cover the entire area of the laser spot of the process laser beam in a quasi-stationary form,
the process laser beam (3) being emitted with a power of more than 1 kW and up to 100 kW and the excitation laser beam (4) being emitted with a power of more than 0.2 kW and up to 3 kW, and the process laser beam spot (3) having an intensity in the impact area (5) of less than or up to 10⁵ W/cm² and the excitation laser beam (4) having an intensity in the impact area (5) of more than 10⁵ W/cm².

2. A method according to claim 1, **characterised in that** the excitation laser beam (4) is set such that a cross-sectional area of the laser spot as an image of the excitation laser beam (4) in the impact area (5) is smaller than a cross-sectional area of the laser spot of the process laser beam (3).

3. A method according to claim 1 or claim 2, **characterised in that** the laser spot of the excitation laser beam (4) is moved across the cross-sectional area of the laser spot of the process laser beam (3) in the impact area (5).

4. A method according to any one of the preceding claims, **characterised in that** the excitation laser beam (4) is emitted in pulses and is placed in the impact area (5) with an intensity distribution over the cross-sectional area of the laser spot of the process laser beam (3) determined by optical beam shaping elements (2).

5. A method according to any one of the preceding claims, **characterised in that** the excitation laser beam (4) has a beam parameter product of less than or equal to 4 mm mrad.

6. A method according to any one of the preceding claims, **characterised in that** the excitation laser beam (4) is emitted at a lower power than the process laser beam (3).

7. A method according to any one of the preceding claims, **characterised in that** the process laser beam (3) is emitted with a power of more than 2.5 kW and up to 8 kW, and the excitation laser beam (4) is emitted with a power of more than 0.5 kW and up to 1.5 kW.

8. A method according to any one of the preceding claims, **characterised in that** the excitation laser beam (4) is formed in the impact area (5) in a punctiform, linear design or rectangular shape.

9. A method according to any one of the preceding claims, **characterised in that** the process laser beam (3) is formed in the impact area (5) in a circular shape or with an elliptical, linear or rectangular cross-section.

## Revendications

1. Procédé d'usinage d'une pièce métallique (6) à l'aide d'une source laser d'excitation émettant un spot de faisceau laser d'excitation (4) et d'une source laser de procédé émettant un spot de faisceau laser de procédé (3),
**caractérisé en ce que** :
le spot de faisceau laser d'excitation (4) est déplacé de manière unidimensionnelle ou bidimensionnelle et le spot de faisceau laser de procédé (3) est superposé, d'une manière qui varie dans l'espace, au moins partiellement sur une région d'impact (5) à usiner de la pièce (6) et
le spot de faisceau laser d'excitation (4) présente dans la région d'impact une intensité de faisceau supérieure à celle du spot de faisceau laser de procédé (3), de sorte qu'un plasma et/ou une vapeur est/sont formé(s) dans la région d'impact (5), ce qui génère, grâce à une augmentation d'intensité locale du spot de faisceau laser d'excitation, des phases de vapeur et de plasma très temporaires qui se superposent au spot laser du faisceau laser de procédé sous une forme quasi-stationnaire de manière à recouvrir la surface, dans lequel
le faisceau laser de procédé (3) est émis avec une puissance supérieure à 1 kW et pouvant aller jusqu'à 100 kW et le faisceau laser d'excitation (4) est émis avec une puissance supérieure à 0,2 kW et pouvant aller jusqu'à 3 kW et le spot de faisceau laser de procédé (3) dans la région d'impact (5) présente une intensité inférieure à, ou pouvant aller jusqu'à, 10⁵ W/cm² et le spot de faisceau laser d'excitation (4) dans la région d'impact (5) présente une intensité supérieure à 10⁵ W/cm².

2. Procédé selon la revendication 1, **caractérisé en ce que** le faisceau laser d'excitation (4) est réglé de telle manière qu'une surface de section transversale du spot laser, sous la forme d'une image du faisceau laser d'excitation (4) dans la région d'impact (5), est inférieure à une surface de section transversale du spot laser du faisceau laser de procédé (3).

3. Procédé selon la revendication 1 ou la revendication 2, **caractérisé en ce que** le spot laser du faisceau laser d'excitation (4) est déplacé sur la surface de section transversale du spot laser du faisceau laser de procédé (3) dans la région d'impact (5).

4. Procédé selon l'une quelconque des revendications précédentes, **caractérisé en ce que** le faisceau laser d'excitation (4) est émis de manière pulsée et est placé sur la surface de section transversale du spot laser du faisceau laser de procédé (3) dans la région d'impact (5) selon une répartition d'intensité déterminée par des éléments optiques de formation de faisceau (2).

5. Procédé selon l'une quelconque des revendications précédentes, **caractérisé en ce que** le faisceau laser d'excitation (4) présente un produit des paramètres de faisceau inférieur ou égal à 4 mm mrad.

6. Procédé selon l'une quelconque des revendications précédentes, **caractérisé en ce que** le faisceau laser d'excitation (4) est émis avec une puissance inférieure à celle du faisceau laser de procédé (3).

7. Procédé selon l'une quelconque des revendications précédentes, **caractérisé en ce que** le faisceau laser de procédé (3) est émis avec une puissance supérieure à 2,5 kW et pouvant aller jusqu'à 8 kW, et le faisceau laser d'excitation (4) est émis avec une puissance supérieure à 0,5 kW et pouvant aller jusqu'à 1,5 kW.

8. Procédé selon l'une quelconque des revendications précédentes, **caractérisé en ce que** le faisceau laser d'excitation (4) dans la région d'impact (5) est en forme de point, de ligne ou de rectangle.

9. Procédé selon l'une quelconque des revendications précédentes, **caractérisé en ce que** le faisceau laser de procédé (3) dans la région d'impact (5) est en forme de cercle ou présente une section transversale elliptique, linéaire ou rectangulaire.
